# EUROPÄISCHE PATENTANMELDUNG

(11) **EP 1 757 563 A2**
(43) Veröffentlichungstag der Anmeldung: **28.02.2007**
(21) Anmeldenummer: 06017323.4
(22) Anmeldetag: 19.08.2006
(51) Int. Cl.: C03B 19/02, C03B 7/10, C03B 11/08, C03B 7/00

(54) **Verfahren zur Herstellung eines Gobs**

(30) Priorität: 26.08.2005 DE 102005041033
(71) Anmelder: Schott AG, 55122 Mainz (DE)
(72) Erfinder: Pfeiffer, Frank, 31073 Grünenplan (DE)
(74) Vertreter: Gahlert, Stefan

(57) **Zusammenfassung**

Es wird ein Verfahren zur Herstellung eines Gobs als Vorprodukt zur Herstellung eines Pressglasproduktes für optische Anwendungen angegeben, bei dem zunächst zur Herstellung eines Gobs aus einem Speiser (10) eine Glasschmelze (12) in eine im Wesentlichen zylindrische Form (18) abgefüllt wird, die aus einem oxidationsbeständigen, gegenüber Glas weitgehend beständigen, nicht zum Kleben neigenden Material besteht, wobei die Glasschmelze (12) zur Portionierung des Gobs mittels einer Glasschere (16) abgetrennt wird, das Gob abgekühlt wird und aus der Form (18) gelöst wird, so dass ein Gob mit einer feuerpolierten Stirnfläche und einer durch Kontakt mit der Form (18) gebildeten Mantelfläche gebildet wird, die zum Blankpressen eines Pressglasproduktes für optische Anwendungen geeignet ist (Fig. 1).

## Beschreibung

Die Erfindung betrifft ein Verfahren zur Herstellung eines Gobs als Vorprodukt zur Herstellung eines Pressglasproduktes für optische Anwendungen, bei dem zunächst aus einem Speiser eine Glasschmelze in eine Form abgefüllt wird, wobei die Glasschmelze zur Portionierung des Gobs mittels einer Glasschere abgetrennt wird, das Gob abgekühlt wird und aus der Form gelöst wird.

Ein derartiges Verfahren ist aus der US 5,738,701 bekannt.

Hierbei wird ein Gob aus einem Speiser in eine Form abgefüllt, die an die Form eines später herzustellenden Linsenpresslings angenähert ist. Die verwendete Form besteht aus Keramik, einer Hartmetalllegierung, Kohlenstoff oder einem Metall.

Für die spätere Herstellung eines Linsenpresslings aus dem Gob wird die der Form abgewandte, feuerpolierte Oberfläche als Referenzfläche verwendet, die keine Abdrücke von der zum Abtrennen verwandten Glasschere aufweisen soll.

Gemäß der US 2003/0211929 A1 werden zunächst sphärische Gobs hergestellt, die anschließend zur Herstellung von Pressglasprodukten in einer Pressform aus SiC verwendet werden.

Gemäß der JP 55-062815 A (Patent Abstracts of Japan) werden aus der Schmelze zunächst annähernd kegelförmige Gobs hergestellt, die durch eine Saugeinrichtung an ihrer Oberseite zum Blankpressen in eine Presseinrichtung übertragen werden.

Eine Herstellung verschiedener Pressglasprodukte, wie z.B. Linsen, Mikrolinsen, Mikrolinsenarrays, aus Gobs ist aus der US 2004/0079114 A1 bekannt. Hierzu werden scheibenförmige oder blockförmige Gobs verwendet.

In der Praxis hat sich bei den bekannten Lösungen jedoch gezeigt, dass die feuerpolierte Seite in der Regel einen Scherenabdruck vom Abscheren des Gobs aus der Glasschmelze aufweist.

Für qualitativ sehr hochwertige Glaspressprodukte ist es daher häufig erforderlich, das Gob zunächst auf der Seite des späteren Blankpressens einer Schleifbehandlung zu unterziehen, um eine ausreichend hochwertige Ausgangsfläche zum Blankpressen zu erhalten. Eine derartige Schleifbehandlung ist naturgemäß aufwändig und teuer.

Der Erfindung liegt somit die Aufgabe zu Grunde, ein Verfahren zur Herstellung eines Gobs anzugeben, das für eine Herstellung von qualitativ hochwertigen Pressglasprodukte für optische Anwendungen geeignet ist, ohne dass dazu eine Schleifbehandlung des Gobs erforderlich ist.

Diese Aufgabe wird durch ein Verfahren zur Herstellung eines Gobs als Vorprodukt zur Herstellung eines Pressglasproduktes für optische Anwendungen gelöst, bei dem zunächst aus einem Speiser eine Glasschmelze in eine im Wesentlichen zylindrische Form abgefüllt wird, die aus einem oxidationsbeständigen, gegenüber Glas weitgehend beständigen, nicht zum Kleben neigenden Material besteht, wobei die Glasschmelze zur Portionierung des Gobs mittels einer Glasschere abgetrennt wird, das Gob abgekühlt wird und aus der Form gelöst wird, so dass ein Gob mit einer feuerpolierten Stirnfläche und einer durch Kontakt mit der Form gebildeten Mantelfläche gebildet wird, die zum Blankpressen eines Pressglasproduktes für optische Anwendungen geeignet ist.

Die Aufgabe der Erfindung wird auf diese Weise vollkommen gelöst.

Erfindungsgemäß wird nämlich ein Gob hergestellt, das entgegen des bisherigen im Stand der Technik üblichen Ansatzes an seiner Mantelfläche eine hochwertige zum Blankpressen geeignete Oberfläche aufweist. Dies wird insbesondere durch die Verwendung eines oxidationsbeständigen, gegenüber Glas weitgehend beständigen und nicht zum Kleben neigenden Materials für die Form bei der Herstellung des Gobs gewährleistet.

Bei einem erfindungsgemäß hergestellten Gob lässt sich der Abdruck der Glasschere, der bei der Herstellung eines Gobs immer an der feuerpolierten Stirnfläche erzeugt wird, aus dem Bereich des Blankpressens heraus an die Seite verlegen. So lässt sich ein qualitativ nachteiliger Einfluss auf die hergestellte blank gepresste Fläche vermeiden. So wird eine Herstellung hochwertiger Pressglasprodukte ermöglicht, ohne dass zuvor eine Schleifbehandlung des Gobs an der Seite durchgeführt wird, auf der ein Blankpressen erfolgt.

Die Form zur Herstellung des Gobs ist erfindungsgemäß im Wesentlichen zylindrisch ausgebildet. Auf diese Weise kann eine besonders einfache und kostengünstige Form zur Herstellung des Gobs genutzt werden, die an der Innenoberfläche auf relativ einfache und kostengünstige Weise mit einer hohen Oberflächengüte bearbeitet werden kann, um eine entsprechend hohe Oberflächengüte des darin hergestellten Gobs ohne eine Nachbehandlung zu gewährleisten.

Gemäß einer weiteren Ausgestaltung der Erfindung wird die Glasschmelze in eine zylindrische Form abgefüllt wird, die an ihrer Innenfläche eine Abflachung aufweist.

Auf diese Weise kann das Gob bei einem späteren Blankpressen in einer Pressform mit der so hergestellten Abflachung auf seiner Mantelfläche korrekt in der Pressform positioniert werden.

Gemäß einer weiteren Ausgestaltung der Erfindung wird die Glasschmelze in eine Form abgefüllt, die aus Titan besteht.

Eine derartige Pressform lässt sich relativ einfach herstellen und weist dennoch eine sehr hohe Beständigkeit gegenüber einer Glasschmelze und eine sehr geringe Klebeneigung auf.

Gemäß einer weiteren Ausgestaltung der Erfindung wird die Glasschmelze in eine Form abgefüllt, die aus einer nicht oxidischen Keramik besteht.

Vorzugsweise handelt es sich hierbei um eine Form, die aus einer Karbidkeramik besteht, besonders bevorzugt um eine Karbidkeramik, die aus der Gruppe ausgewählt ist, die durch eine Siliziumkarbidkeramik, eine Borkarbidkeramik und eine Wolframkarbidkeramik gebildet ist.

Es wird so ein leichtes Ablösen des Gobs aus der Form gewährleistet und gleichzeitig sichergestellt, dass die Form praktisch keinerlei Verschleiß unterliegt.

So kann eine qualitativ sehr hochwertige Oberfläche des Gobs im Bereich seiner Mantelfläche erzielt werden.

Soweit die Form aus Titan besteht, kann diese mit einem spanabhebenden Verfahren, wie etwa durch Drehen bzw. Fräsen, erzeugt werden und anschließend auf Endmaß geschliffen werden.

Dies ermöglicht eine besonders einfache und kostengünstige Herstellung.

Soweit die Form aus Keramik besteht, so wird diese vorzugsweise durch ein Sinterverfahren hergestellt. Im Falle von Siliziumkarbidkeramik kann auch ein Infiltrationsverfahren verwendet werden. Nach der Herstellung durch Sintern oder Infiltrieren wird die betreffende Form in der Regel durch eine Schleifbehandlung auf Endmaß geschliffen.

In weiter vorteilhafter Ausgestaltung des Verfahrens wird die Form derart dimensioniert wird und die Betätigung der Glasschere derart gesteuert, dass ein Gob gebildet wird, das ein Verhältnis von Höhe zu Durchmesser aufweist, das zwischen 0,3 und 3 liegt, vorzugsweise im Bereich zwischen 0,5 und 2, weiter bevorzugt zwischen 0,8 und 1,25, besonders bevorzugt zwischen 0,9 und 1,1 liegt.

Durch die Verwendung eines derartigen Gobs ergibt sich eine besonders vorteilhaftes Pressverhalten beim Blankpressen des Gobs an der Mantelfläche, da die Fließwege minimiert sind.

Außerdem ergibt sich so ein sehr gleichmäßiger Glasfluss über den gesamten blank gepressten Bereich, wodurch die Qualität der blank gepressten Oberfläche weiter verbessert wird.

Bei der Herstellung eines Pressglasproduktes aus einem erfindungsgemäß hergestellten wird das Gob vorzugsweise, ohne zuvor eine Schleifbehandlung durchzuführen, auf seiner Mantelfläche liegend in einer Pressform platziert und blank gepresst.

Auf diese Weise kann ein sehr hochwertiges Pressglasprodukt unter Vermeidung von Scherenabdrücken kostengünstig hergestellt werden.

Hierbei wird das Gob vorzugsweise auf einer Abflachung an seiner Mantelfläche liegend in der Pressform platziert.

Dadurch ist eine korrekte Positionierung gewährleistet.

Das Gob kann hierbei an seiner Oberseite blank gepresst werden, an seiner Unterseite blank gepresst werden oder an beiden Seiten blank gepresst werden.

Dies wird erfindungsgemäß ohne Qualitätsverlust ermöglicht, da die Abdrücke von der Glasschere in den seitlichen Bereich verlegt sind.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine schematische Darstellung des Abfüllens einer Form aus einem Speiser zur Herstellung eines Gobs;
- Fig. 2: eine Aufsicht eines beispielhaften Pressglasproduktes, das nach dem erfindungsgemäßen Verfahren hergestellt ist;
- Fig. 3: einen Querschnitt durch eine Pressform nach dem Stand der Technik, bei der ein Gob mit einer geschliffenen Oberfläche zur Herstellung des Pressglasproduktes genutzt wird; und
- Fig. 4: einen Querschnitt durch eine Form zur Herstellung des Pressglasproduktes gemäß Fig. 2, bei dem ein erfindungsgemäßes Gob auf seiner Mantelfläche liegend in der Pressform platziert wird.

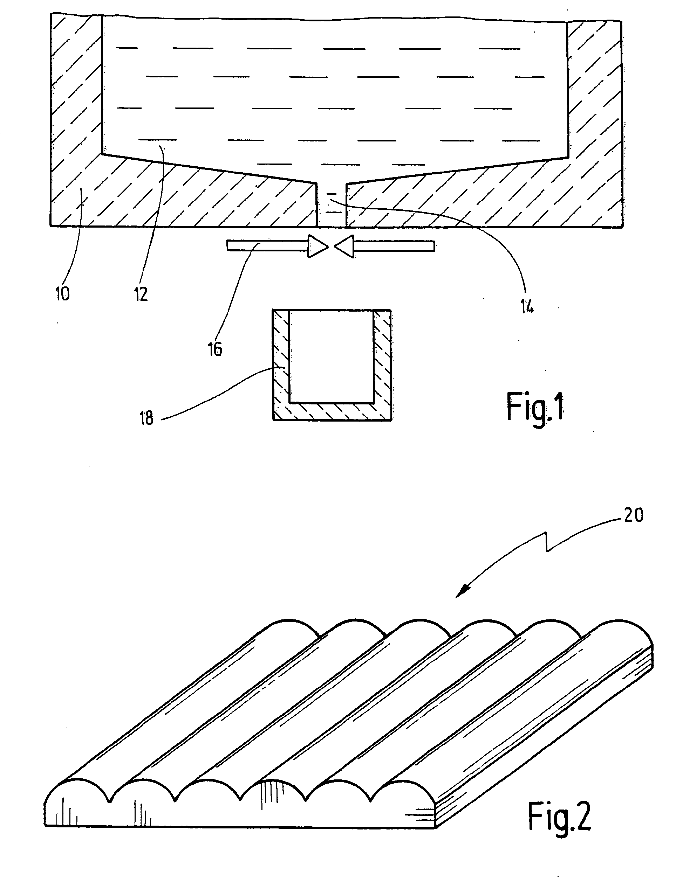

In Fig. 1 ist ein Speiser 10 schematisch dargestellt, in dem sich eine Glasschmelze 12 befindet.

Aus dem Speiser 10 kann Glasschmelze über eine bodenseitige Austrittsöffnung 14 in eine darunter angeordnete Form 18 zur Herstellung von Gobs austreten. Dabei erfolgt eine geeignete Portionierung durch Verwendung einer Glasschere 16. Wird so in der Form 18 ein Gob abgefüllt, so ergibt sich bspw. ein zylindrisches Gob mit einer feuerpolierten Oberfläche (Stirnfläche), in der sich jedoch immer ein Abdruck der verwendeten Glasschere ergibt.

Solche Gobs werden bspw. zur Herstellung von optisch hochwertigen Pressglasprodukten für optische Anwendungen benötigt, wie dies beispielhaft in Fig. 2 mit der Ziffer 20 angedeutet ist. Bei diesem Pressglasprodukt 20 handelt es sich beispielsweise um ein Zylinderlinsenarray wie aus der US 2004/0079114 A1 bekannt.

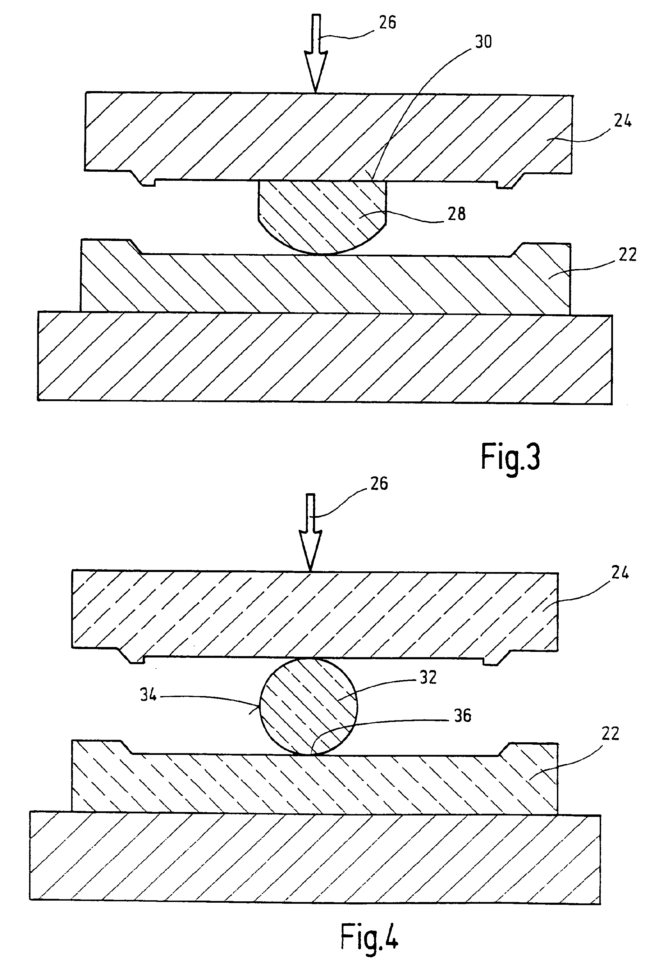

Fig. 3 zeigt die Herstellung eines solchen Pressglasproduktes 20 nach dem Stand der Technik.

Hierzu wird eine Pressform verwendet, mit einer unteren Pressformhälfte 22 und einer oberen Pressformhälfte 24. Als Gob wird hierzu ein Gob 28 verwendet, da das an seiner Unterseite konvex ausgebildet ist, woran sich nach oben hin eine zylindrische Form anschließt, die an ihrer Oberseite 30 geschliffen ist. Die konvexe Form der Unterseite wird verwendet, um die Kontaktzeit des Glases mit der Pressform zu minimieren.

Eine geschliffene Oberfläche auf der Seite des Blankpressens ist nach dem Stand der Technik notwendig, um eine ausreichend hohe Oberflächengüte auf der Seite des Blankpressens zu gewährleisten.

Beim Pressvorgang wird das Gob 28 zwischen den beiden Formhälften 22, 24 bis auf eine ausreichend hohe Temperatur über der Transformationstemperatur erwärmt und durch Bewegen der beiden Formhälften 22, 24 zueinander, wie durch den Pfeil 26 dargestellt, zu der Endform gepresst, wie sie bspw. in Fig. 2 dargestellt ist.

Nach dem erfindungsgemäßen Verfahren, das schematisch in Fig. 4 dargestellt ist, ergibt sich eine deutliche Vereinfachung und eine erhebliche Kostenersparnis gegenüber dem herkömmlichen Verfahren, wobei gleichzeitig eine gleich bleibend hohe Oberflächenqualität auf der blank gepressten Seite (Oberseite des Pressglasproduktes 20 gemäß Fig. 2) gewährleistet ist.

Hierzu wird, wie aus Fig. 4 zu ersehen ist, ein Gob 32 verwendet, das eine zylindrische Form aufweist und auf seiner Mantelfläche 34 liegend in der Pressform 22, 24 platziert wird. Um eine korrekte Positionierung des Gobs 32 in der Mitte der Pressform zu erleichtern, weist das Gob 32 eine schmale Abflachung 36 im Bereich seiner Mantelfläche 34 auf. Auf diese Weise wird ein Wegrollen nach der Platzierung in der Pressform vermieden. Das Gob 32 wird, wie schematisch in Fig. 1 dargestellt, durch Abfüllung aus einem Speiser 10 in eine Form 18 unter Verwendung einer Glasschere 16 hergestellt.

Um eine besonders hochwertige Mantelfläche 34 zu gewährleisten, und um eine sichere Ablösung aus der Form 18 nach Erkalten zu gewährleisten, besteht die verwendete Form 18 aus einem oxidationsbeständigen, gegenüber einer Glasschmelze weitgehend beständigen Material, vorzugsweise aus Titan, oder aus einer nicht oxidischen Keramik, vorzugsweise aus einer Karbidkeramik, wie etwa Siliziumkarbidkeramik, einer Borkarbidkeramik oder einer Wolframkarbidkeramik.

Insbesondere eine Herstellung aus Titan oder Siliziumkarbid gewährleistet wegen der Beständigkeit gegenüber einer Glasschmelze eine leichte Ablösbarkeit aus der Form ohne jegliches Kleben. Gleichermaßen lassen sich sowohl Titan als auch Siliziumkarbid auf kostengünstige Weise herstellen und bearbeiten.

Eine Schleifbehandlung der verwendeten Gobs zur Herstellung der Pressglasprodukte ist erfindungsgemäß nicht erforderlich.

## Patentansprüche

1. Verfahren zur Herstellung eines Gobs (32) als Vorprodukt zur Herstellung eines Pressglasproduktes (20) für optische Anwendungen, bei dem zunächst aus einem Speiser (10) eine Glasschmelze (12) in eine im Wesentlichen zylindrische Form (18) abgefüllt wird, die aus einem oxidationsbeständigen, gegenüber einer Glasschmelze (12) weitgehend beständigen, nicht zum Kleben neigenden Material besteht, wobei die Glasschmelze zur Portionierung des Gobs (32) mittels einer Glasschere (16) abgetrennt wird, das Gob (32) abgekühlt wird und aus der Form gelöst wird, so dass ein Gob (32) mit einer feuerpolierten Stirnfläche und einer durch Kontakt mit der Form (18) gebildeten Mantelfläche (34) gebildet wird, die zum Blankpressen eines Pressglasproduktes (20) für optische Anwendungen geeignet ist.

2. Verfahren nach Anspruch 1, bei dem die Glasschmelze (12) in eine zylindrische Form (18) abgefüllt wird, die an ihrer Innenfläche eine Abflachung (36) aufweist.

3. Verfahren nach einem der Ansprüche 1 bis 2, bei dem die Glasschmelze (12) in eine Form (18) abgefüllt wird, die aus Titan besteht.

4. Verfahren nach einem der Ansprüche 1 bis 2, bei dem die Glasschmelze (12) in eine Form (18) abgefüllt wird, die aus einer nicht oxidischen Keramik besteht.

5. Verfahren nach Anspruch 4, bei dem die Glasschmelze (12) in eine Form (18) abgefüllt wird, die aus einer Karbidkeramik besteht.

6. Verfahren nach Anspruch 5, bei dem die Glasschmelze (12) in eine Form (18) abgefüllt wird, die aus einer Karbidkeramik besteht, die aus der Gruppe ausgewählt ist, die durch eine Siliziumkarbidkeramik, eine Borkarbidkeramik und eine Wolframkarbidkeramik gebildet ist.

7. Verfahren nach einem der vorhergehenden Ansprüche, bei dem die Form (18) derart dimensioniert wird und die Glasschere (16) derart gesteuert wird, dass ein Gob (32) gebildet wird, das ein Verhältnis von Höhe zu Durchmesser aufweist, das zwischen 0,3 und 3 liegt, vorzugsweise im Bereich zwischen 0,5 und 2, weiter bevorzugt zwischen 0,8 und 1,25, besonders bevorzugt zwischen 0,9 und 1,1 liegt.

8. Gob hergestellt nach einem Verfahren gemäß einem der vorhergehenden Ansprüche.

9. Verfahren zur Herstellung eines Pressglasproduktes (20) für optische Anwendungen aus einem Gob (32) gemäß Anspruch 8, bei dem das Gob (32), ohne zuvor eine Schleifbehandlung durchzuführen, auf seiner Mantelfläche (34) liegend in einer Pressform (22, 24) platziert wird und blank gepresst wird.

10. Verfahren nach Anspruch 9, bei dem das Gob (32) auf einer Abflachung (36) an seiner Mantelfläche (34) liegend in der Pressform (22, 24) platziert wird.

11. Verfahren nach Anspruch 9 oder 10, bei dem das Gob (32) an seiner Oberseite blank gepresst wird.

12. Verfahren nach Anspruch 9, 10 oder 11, bei dem das Gob (32) an seiner Unterseite blank gepresst wird.
